(19) Europäisches Patentamt
European Patent Office
Office européen des brevets

(11) **EP 4 420 925 A1**

(12) **EUROPÄISCHE PATENTANMELDUNG**

(43) Veröffentlichungstag:
**28.08.2024 Patentblatt 2024/35**

(21) Anmeldenummer: 23158305.5

(22) Anmeldetag: **23.02.2023**

(51) Internationale Patentklassifikation (IPC):
**B60L 58/16** [(2019.01)]

(52) Gemeinsame Patentklassifikation (CPC):
**B60L 58/16**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Carrosserie Hess AG
4512 Bellach (CH)**

(72) Erfinder:
• **Amacker, Nicolas
3013 Bern (CH)**
• **Wunderlich, Jan
4710 Balsthal (CH)**

(74) Vertreter: **Keller Schneider
Patent- und Markenanwälte AG
Eigerstrasse 2
Postfach
3000 Bern 14 (CH)**

(54) **VERFAHREN ZUR OPTIMIERUNG DER LEBENSDAUER EINER ANTRIEBSBATTERIE EINES FAHRZEUGS**

(57) Bei einem Verfahren zur Optimierung der Lebensdauer einer Antriebsbatterie eines Fahrzeugs wird mit einer ersten Periodizität ein effektiver Gesundheitszustand erhoben (71). Ausgehend von einem zuletzt erhobenen effektiven Gesundheitszustand, unter Berücksichtigung von Nutzungsdaten des Fahrzeugs seit der letzten Ermittlung des abgeschätzten Gesundheitszustands wird durch Anwendung eines Alterungsmodells für die Antriebsbatterie mit einer zweiten Periodizität ein abgeschätzter Gesundheitszustand der Antriebsbatterie ermittelt (61, 62). Das Fahrzeug wird schliesslich anhand des abgeschätzten Gesundheitszustands und eines aktuellen Antriebsenergiebedarfs betrieben (21), wobei mindestens ein batteriebelastungsrelevanter Regelparameter mit mindestens einer dritten Periodizität neu bestimmt wird. Das Alterungsmodell für die Antriebsbatterie wird nach Erhebung des effektiven Gesundheitszustands jeweils kalibriert (72).

Fig. 2

EP 4 420 925 A1

**Beschreibung**

**Technisches Gebiet**

Die Erfindung betrifft ein Verfahren zur Optimierung der Lebensdauer einer Antriebsbatterie eines Fahrzeugs sowie eine Anordnung zum Betreiben eines elektrisch betriebenen Fahrzeugs.

**Stand der Technik**

Eine wesentliche Komponente elektrisch angetriebener Fahrzeuge stellt die Antriebsbatterie dar. Diese ist einem Alterungsprozess unterworfen, welcher dazu führt, dass die nutzbare Kapazität (also die speicherbare und abrufbare Energie) abnimmt und der Innenwiderstand der Antriebsbatterie zunimmt. Die Alterung lässt sich in eine Alterung aufgrund der Belastungen im Betrieb und in eine kalendarische Alterung aufteilen.

Die Alterung aufgrund des Fahrzeugbetriebs hängt von verschiedenen Parametern ab, u. a. von den auftretenden Lade- und Entladeleistungen und den Zellentemperaturen. Ein unterschiedlicher Betrieb führt somit auch zu einer unterschiedlichen Alterung. Entsprechend kann die Lebensdauer identischer Batterien unterschiedlich sein, wobei mit Lebensdauer in Regel die erreichte Anzahl Fahrl<ilometer bis zu einer vorgegebenen Restkapazität (z. B. 80% der Anfangskapazität) bezeichnet wird.

Es sind Verfahren bekannt, um die Lebensdauer von Antriebsbatterien durch eine Beeinflussung des Fahrzeugbetriebs zu steigern.

So betrifft die US 2022/0126723 A1 (GM Cruise) die flottenbasierte Optimierung von Fahrbatterien elektrischer Fahrzeuge. Dazu wird der aktuelle State-of-Health (SOH) mittels Impedanz-Spektroskopie gemessen. Die Messergebnisse vieler Fahrzeuge der Flotte werden miteinander verglichen, um Parameter wie die verbleibende Lebensdauer oder Faktoren für eine erhöhte Batteriealterung zu ermitteln; es lässt sich anhand der Daten auch ein Machine-Learning-Modell trainieren, um die Batteriekapazität, die verbleibende Lebensdauer oder andere Parameter abzuschätzen. Massnahmen zur Optimierung des SOH schliessen namentlich Beschränkungen der Nutzung bzw. des Ladens einer spezifischen Batterie oder eine Anpassung der Routenzuweisungen ein. Möglich ist auch eine Beschränkung des Energiebezugs für das Heizungs-, Lüftungs- und Klimasystem (HLI<). Der aktuelle SOH kann von Zeit zu Zeit durch eine Ladungszählung ermittelt werden; basierend auf den entsprechenden Daten können Ansätze entwickelt werden, die eine schnellere und die Batterie weniger belastende Bestimmung des SOH ermöglichen und die häufiger durchführbar sind.

Oft geht eine Steigerung der Batterielebensdauer mit Einschränkungen des Fahrbetriebs und/oder mit I<omforteinbussen einher. Ein übermassig batterieschonender Betrieb zur Sicherstellung einer Mindestlebensdauer ist deshalb nicht erwünscht.

**Darstellung der Erfindung**

Aufgabe der Erfindung ist es, ein dem eingangs genannten technischen Gebiet zugehöriges Verfahren zur Optimierung der Lebensdauer einer Antriebsbatterie eines Fahrzeugs zu schaffen, welches das Erreichen einer vorgegebenen Lebensdauer der Antriebsbatterie mit minimierten nachteiligen Effekten auf den Fahrbetrieb und/oder den Nutzerl<omfort sicherstellt.

Die Lösung der Aufgabe ist durch die Merkmale des Anspruchs 1 definiert. Gemäss der Erfindung umfasst ein Verfahren zur Optimierung der Lebensdauer einer Antriebsbatterie eines Fahrzeugs folgende Schritte:

a) Erheben eines effektiven Gesundheitszustandes der Antriebsbatterie mit einer ersten Periodizität;

b) Ermitteln eines abgeschätzten Gesundheitszustands der Antriebsbatterie mit einer zweiten Periodizität, ausgehend von einem zuletzt erhobenen effektiven Gesundheitszustand, unter Berücksichtigung von Nutzungsdaten des Fahrzeugs seit einer letzten Ermittlung des abgeschätzten Gesundheitszustands, durch Anwendung eines Alterungsmodells für die Antriebsbatterie;

c) Betreiben des Fahrzeugs anhand des abgeschätzten Gesundheitszustands und eines aktuellen Antriebsenergiebedarfs, wobei mindestens ein batteriebelastungsrelevanter Regelparameter mit mindestens einer dritten Periodizität neu bestimmt wird.

Dabei wird das Alterungsmodell für die Antriebsbatterie nach Erhebung des effektiven Gesundheitszustands kalibriert.

Der Gesundheitszustand einer Antriebsbatterie wird regelmässig als State of Health (SOH) bezeichnet. Er ist definiert als Verhältnis zwischen einer verbleibenden Ladungskapazität $Q_b(t)$ zu einer ursprünglichen Ladungskapazität $Q_{b,init}$:

$$\Psi(t) = \frac{Q_b(t)}{Q_{b,init}}.$$

Bei den Nutzungsdaten handelt es sich um Daten zur Nutzung des Fahrzeugs, welche für die Alterung der Batterie relevant sind. Sie können auf Ebene des Fahrzeugs erhoben worden sein (z. B. Geschwindigkeiten, Beschleunigungen, Antriebsleistungen, Betriebszeiten usw.) und/oder auf Ebene der Antriebsbatterie (z. B. bezogene Leistung, Ladeleistung, Ladestand, Zelltemperaturen usw.).

Verschiedene Alterungsmodelle für die Antriebsbatterie sind einsetzbar. Derartige Modelle sind beispielsweise im OpenSource-Projekt OpenSesame verfügbar (M. Beyeler, S. S. Bhoir, S. Broennimann, Y. Moullet, Open-SESAME-Battery, V1.1, https://gitlab.ti.bfh.ch/oss/esrec/open-sesame (2022)).

Erfindungsgemäss wird beim Betreiben des Fahrzeugs nebst dem aktuellen Antriebsenergiebedarf (und möglichen weiteren Eingangsparametern, betreffend z. B. den gewünschten Betrieb eines Heiz-, Kühl- bzw. Klimatisierungssystems sowie weiterer Komponenten des Fahrzeugs) der abgeschätzte Gesundheitszustand der Antriebsbatterie berücksichtigt. In diesem Zusammenhang wird mindestens ein batteriebelastungsrelevanter Regelparameter wiederholt neu bestimmt. Durch die Vorgabe dieses Regelparameters lässt sich die Batteriealterung beeinflussen, insbesondere im Hinblick auf die Gewährleistung einer vorbestimmten Batterie-Lebensdauer bei geringstmöglichen Einschränkungen im Fahrbetrieb und/oder minimalem Energieverbrauch.

Die Periodizitäten sind insbesondere so gewählt, dass die Neubestimmung des batteriebelastungsrelevanten Regelparameters häufig erfolgt, um den wechselnden Anforderungen im Fahrbetrieb Rechnung zu tragen. Die Ermittlung des abgeschätzten Gesundheitszustandes kann seltener erfolgen, z. B. jeweils nach Abschluss einer Fahrmission oder beim Abstellen des Fahrzeugs in einem Depot o. ä. Das Erheben des effektiven Gesundheitszustandes erfolgt insbesondere durch eine explizite Bestimmung der Restkapazität der Antriebsbatterie mittels gängiger Verfahren. Diese sind zeitaufwendig, entsprechend wird dieser Vorgang deutlich seltener durchgeführt.

Die erwähnten Schritte können im Wesentlichen regelmässig stattfinden, gemäss einem vorbestimmten Zeitraster und/oder bei vorbestimmten Auslösekriterien, wie z. B. beim Abstellen des Fahrzeugs, im Rahmen von Wartungsarbeiten o. ä.

Erfindungsgemäss wird das Alterungsmodell in Abhängigkeit des Verhaltens der konkreten Antriebsbatterie kalibriert, d. h. das Modell wird angepasst, um die Alterung dieser konkreten Antriebsbatterie bestmöglich zu beschreiben. Ein initiales Alterungsmodell kann dabei zunächst universell vorgegeben sein, wobei Erkenntnisse aus dem Betrieb einer Fahrzeugflotte oder einer Teilflotte mit gleichen oder analogen Antriebsbatterien bei der Festlegung des initialen Alterungsmodells und/oder bei der Kalibrierung (mit)berücksichtigt werden können.

Das erfindungsgemässe Verfahren ermöglicht es somit, sicherzustellen, dass die Antriebsbatterie weder zu schnell altert und entsprechend zu früh ersetzt werden muss, noch zu sehr geschont wird, was zu einem ineffizienten Fahrbetrieb, einem erhöhten Energieverbrauch oder Komforteinbussen führen kann. Mit Hilfe des erfindungsgemässen Verfahrens kann ebenfalls vermieden werden, dass zur Sicherstellung der Lebensdauer und/oder der Anforderungen im Fahrbetrieb Batterien mit zu hoher Kapazität und dadurch unnötig hohem Gewicht zum Einsatz kommen. Ebenso kann die Wahl des auf einer bestimmten Linie eingesetzten Fahrzeugs und/oder seine Konfiguration optimiert werden. Aufgrund der regelmässigen Bestimmungen des effektiven Gesundheitszustands und der Anpassung desselben durch zwischenzeitliche Abschätzungen steht laufend ein realistischer SOH-Wert als Basis für den Betrieb des Fahrzeugs zur Verfügung, gleichzeitig werden systematische, sich über die Lebensdauer aufsummierende, Abweichungen des SOH-Werts vom tatsächlichen Gesundheitszustand vermieden.

Mit Vorteil wird der Regelparameter anhand einer Abweichung des abgeschätzten Gesundheitszustands von einem Referenzverlauf bestimmt. Die Abweichung wird insbesondere gemäss der zweiten Periodizität, also bei einer Neuermittlung des abgeschätzten Gesundheitszustands, aktualisiert.

Der Referenzverlauf repräsentiert eine erwartete Entwicklung des Gesundheitszustands der Antriebsbatterie. Ist der abgeschätzte Gesundheitszustand besser als gemäss Referenzverlauf, können Massnahmen zur Schonung der Antriebsbatterie, die z. B. Einschränkungen im Fahrbetrieb oder einen höheren Energieverbrauch zur Folge haben, reduziert werden. Ist der abgeschätzte Gesundheitszustand schlechter als gemäss Referenzverlauf, können Massnahmen zur Schonung der Antriebsbatterie ausgelöst oder verstärkt werden. Die relativ engmaschige Ermittlung bzw. Abschätzung des Gesundheitszustands anhand von konkreten Nutzungsdaten ermöglicht in diesem Zusammenhang kurzfristige Massnahmen und vermeidet letztlich sowohl eine übermässige Degradation der Antriebsbatterie als auch unnötige Einschränkungen oder einen zu hohen Energieverbrauch aufgrund einer übermässigen Schonung der Antriebsbatterie.

Bevorzugt wird der Referenzverlauf derart bestimmt, dass bei einer vorgegebenen Laufleistung die Antriebsbatterie einen vorgegebenen Gesundheitszustand aufweist. Es wird also beispielsweise vorgegeben, dass die Antriebsbatterie bei einer Laufleistung von 1.2 Mio. I<m noch einen SOH bzw. Restkapazität von 80% aufweist. Der Referenzverlauf des SOH ist insbesondere eine Funktion der gefahrenen Strecke und kann eine lineare oder nicht-lineare Abhängigkeit aufweisen. Letzteres kann sinnvoll sein, um altersabhängige Einflüsse auf die Batteriealterung zu berücksichtigen. Je nach Antriebsbatterie und Fahrzeug kann sich z. B. eine verstärkte Alterung bei tieferem SOH ergeben.

Somit wird die vorgegebene Lebensdauer in einem geschlossenen Regelkreis angepeilt. Ziel ist ein möglichst effizienter und komfortabler Betrieb bei Sicherstellung der geforderten Batterie-Lebensdauer.

Mit Vorteil wird der Referenzverlauf nach Erhebung des effektiven Gesundheitszustands neu berechnet. Statt des Gesamtverlaufs zwischen dem Ersteinsatz der neuen Antriebsbatterie und der vorgegebenen Laufleistung repräsentiert der neu berechnete Referenzverlauf somit noch die Zeitspanne zwischen der letzten Erhebung und der vorgegebenen Laufleistung, wobei der SOH-Wert der letzten Erhebung den Startwert des Verlaufs bildet. Liegt dieser höher als gemäss der vorgängigen Definition des Referenzverlaufs, wird eine (etwas) schnellere Alterung akzeptiert, liegt er tiefer, wird die Batterie zusätzlich geschont, um eine (etwas) langsamere Alterung zu erreichen.

Mit Vorteil umfassen die zur Ermittlung des abgeschätzten Gesundheitszustands berücksichtigten Nutzungsdaten einen Verlauf eines Batterie-Ladezustands seit der letzten Ermittlung. Es hat sich gezeigt, dass sich ausgehend vom Verlauf dieses einen Werts eine zuverlässige Abschätzung erreichen lässt, wobei indirekt sowohl die Einflüsse von Verbrauchern als auch durch Lade- und Bremsvorgänge mitberücksichtigt werden und Einflüsse des jeweiligen Ladezustands in die Abschätzung einfliessen können. Die Abschätzung kann gestützt auf den Verlauf selbst und/oder auf die erste und/oder zweite Ableitung des Batterie-Ladezustands erfolgen. Bei Bedarf können auch noch höhere Ableitungen berücksichtigt werden.

Bei einer bevorzugten Ausführungsform ergibt sich der abgeschätzte Gesundheitszustand aus dem letzterhobenen effektiven Gesundheitszustand abzüglich einer Summe von Degradationsabschätzungen, die gestützt auf das Alterungsmodell, ausgehend von den Nutzungsdaten, seit der letzten Erhebung des effektiven Gesundheitszustands vorgenommen wurden. Jede Degradationsabschätzung deckt dabei einen Zeitraum seit der vorgängigen Abschätzung ab.

Bevorzugt wird zum Kalibrieren des Alterungsmodells der abgeschätzte Gesundheitszustand der Antriebsbatterie zum Zeitpunkt der Erhebung des effektiven Gesundheitszustands mit dem erhobenen effektiven Gesundheitszustand verglichen. Die Differenz entspricht einer Über- oder Unterschätzung der effektiven Alterung. Durch eine Anpassung des Alterungsmodells kann der Grad der Über- bzw. Unterschätzung reduziert werden, was für das Folgeintervall in der Regel zu einer besseren Abschätzung führt. Insbesondere werden durch die Kalibrierung individuelle Charakteristika der konkreten Antriebsbatterie automatisch berücksichtigt, d. h. das Alterungsmodell passt sich der konkreten Antriebsbatterie automatisch an.

Mit Vorteil wird zur Bestimmung des Regelparameters (zumindest zeitweise bzw. nebst anderen Zielgrössen) eine Optimierung im Hinblick auf eine Maximierung einer ersten Zielgrösse entsprechend einer Lebensdauer der Antriebsbatterie vorgenommen. Diese Optimierung ermöglicht somit eine Erhöhung der Lebensdauer bzw. eine Erhöhung der Restkapazität (bzw. des SOH) bei der vorgegebenen Laufleistung. Sie ist insbesondere dann geboten, wenn der Gesundheitszustand der Batterie zu einem bestimmten Zeitpunkt schlechter ist als geboten, z. B. tiefer als gemäss einem Referenzverlauf. Eine Maximierung der Lebensdauer ergibt sich insbesondere durch das Minimieren von schädigenden Betriebsphasen, z. B. durch eine Beschränkung der Ladeleistung, namentlich bei Bremsvorgängen, oder durch eine Beschränkung der Bezugsleistung durch eine reduzierte Beschleunigung und/oder ein temporäres Zurückfahren der Bezugsleistung von Fahrzeugkomponenten (z. B. dem HLI<).

Mit Vorteil wird dazu im Hinblick auf die Maximierung der ersten Zielgrösse ein Einfluss von Betriebsparametern auf den Gesundheitszustand der Antriebsbatterie anhand der Nutzungsdaten des Fahrzeugs und des erhobenen effektiven Gesundheitszustands bestimmt. So kann fahrzeug- und antriebsbatteriespezifisch festgestellt werden, welche Betriebskonfigurationen, Massnahmen und Ereignisse zu einer erhöhten (oder reduzierten) Batteriealterung führen. Ebenso kann so Einflüssen der Batteriealterung selbst automatisch Rechnung getragen werden: Es wird z. B. automatisch festgestellt, wenn gewisse Vorgänge bei höherem Batteriealter eine zusätzliche Belastung darstellen. Es ergibt sich also ein selbstlernendes Regelsystem, das für die Antriebsbatterie schädigende Betriebspunkte (inkl. fahrzeug- und batteriespezifische Abhängigkeiten sowie Einflüsse der Batteriealterung) automatisch erkennt und im Rahmen eines Regelkreises Massnahmen auslöst, um die geforderte Lebensdauer der Antriebsbatterie bei geringstmöglichen Beeinträchtigungen des Fahrbetriebs und des Nutzerl<omforts sicherzustellen.

Der Zusammenhang zwischen den Betriebsparametern und dem Einfluss auf den Gesundheitszustand der Antriebsbatterie kann beispielsweise mit Hilfe von Machine-Learning-Techniken, einschliesslich Regressionsverfahren, ermittelt werden

Mit Vorteil wird zur Bestimmung des Regelparameters (zumindest zeitweise bzw. nebst anderen Zielgrössen) eine Optimierung im Hinblick auf eine Minimierung einer zweiten Zielgrösse entsprechend einem (Primär-) Energieverbrauch des Fahrzeugs vorgenommen. Das erfindungsgemässe Verfahren hat insbesondere zum Ziel, eine vorgegebene Batterie-Lebensdauer sicherzustellen, ohne dass die Antriebsbatterie übermässig geschont werden muss, was zu Einschränkungen im Fahrbetrieb und namentlich zu einem erhöhten Energieverbrauch führen kann. Beispielsweise kann zur Schonung der Batterie eine maximale Leistungsaufnahme der Antriebsbatterie bei Bremsvorgängen beschränkt werden, was bedeutet, dass ein gewisser Teil der Bremsenergie nicht rel<uperiert, sondern z. B. in Bremswiderständen in Wärme umgewandelt wird. Wenn nun eine solche Beschränkung gar nicht oder nur in reduziertem Mass notwendig ist, ohne das Erreichen der Lebensdauer zu gefährden, so ist die Optimierung im Hinblick auf eine Reduktion des Energieverbrauchs möglich.

Besonders bevorzugt wird in Abhängigkeit der Abweichung des abgeschätzten Gesundheitszustands vom Referenzverlauf eine Gewichtung der ersten und der zweiten Zielgrösse in der Optimierung angepasst. Namentlich erfolgt eine stärkere Gewichtung der ersten Zielgrösse, wenn der abgeschätzte Gesundheitszustand den Referenzverlauf unterschreitet, während einer stärkere Gewichtung der zweiten Zielgrösse möglich ist, wenn der abgeschätzte Gesundheitszustand besser ist als gemäss Referenzverlauf.

Somit kann der Trade-off zwischen dem (Primär-)Energieverbrauch und der Batteriealterung automatisch und durch Variation eines einzelnen Parameters optimal eingestellt werden.

Mit Vorteil ist eine erste Periode der ersten Periodizität länger als eine zweite Periode der zweiten Periodizität, und die zweite Periode ist länger als die dritte Periode der dritten Periodizität. Dabei betragen insbesondere:

- die erste Periode 14 Tage bis 400 Tage,

- die zweite Periode 1 Stunde bis 24 Stunden, und/oder

- die dritte Periode 0.1 bis 10 s.

Die Erhebung des effektiven Gesundheitszustands muss somit nur relativ selten vorgenommen werden, z. B. im Rahmen periodischer Wartungsarbeiten. Die neue Ermittlung des abgeschätzten Gesundheitszustands z. B. nach jeder Mission oder täglich nach Einsatzende ermöglicht gleichzeitig eine ausreichend engmaschige Berücksichtigung der Batteriealterung im Fahrbetrieb. Die Bestimmung des Regelparameters erfolgt häufiger, um den wechselnden Anforderungen im Fahrbetrieb Rechnung zu tragen.

Falls mehrere Regelparameter in Abhängigkeit des abgeschätzten Gesundheitszustands neu bestimmt werden, so können die entsprechenden Periodizitäten übereinstimmen oder voneinander abweichen. So kann die Antriebsleistung z. B. häufiger neu bestimmt werden als Regelparameter für das HLI<.

Das erfindungsgemässe Verfahren ist insbesondere beim Betrieb batterieelel<trischer Fahrzeuge einsetzbar, besonders bevorzugt bei Bussen zum Personentransport, z. B. im Linienbetrieb. Vorliegend wird unter einem «batterieelektrischen Fahrzeug» ein Fahrzeug verstanden, dessen Antriebsleistung mittels eines oder mehrerer Elektromotoren erzeugt wird, die von einer oder mehreren Antriebsbatterien gespeist werden, wobei die elektrische Energie für die Antriebsbatterie(n) während Ladevorgängen von externen Stromquellen zugeführt wird. Die Ladevorgänge können stationär und/oder während der Fahrt, z. B. über Oberleitungen, erfolgen.

Besonders vorteilhaft ist das erfindungsgemässe Verfahren zum Betreiben von Fahrzeugen, die einen Stromabnehmer umfassen, um während eines Fahrbetriebs elektrische Energie von einer Oberleitung aufzunehmen. Es handelt sich dabei insbesondere um Trolleybusse, die in der Lage sind, Teilstrecken ohne Bezug von elektrischer Antriebsenergie aus der Oberleitung zurückzulegen, wobei die Antriebsenergie auf diesen Teilstrecken der Antriebsbatterie entnommen wird. So lassen sich auch Linien befahren, die nicht durchgehend mit Oberleitungen ausgerüstet sind. Auf den Teilstrecken mit Oberleitung wird die Antriebsbatterie wieder aufgeladen.

Bei Trolleybussen kann ein übermässig batterieschonender Betrieb zu einem erhöhten Gesamtenergieverbrauch führen. Mit Hilfe des erfindungsgemässen Verfahrens lässt sich dies vermeiden.

Mit Hilfe des erfindungsgemässen Verfahrens lässt sich insbesondere auch die Ladeleistung als Regelparameter in Abhängigkeit des abgeschätzten Gesundheitszustands der Antriebsbatterie einstellen. Trolleybusse, die gemäss der Erfindung betreibbar sind, können zur Aufnahme elektrischer Energie nebst den Stromabnehmern für die Oberleitung auch Ladeanschlüsse umfassen, um z. B. die Antriebsbatterie des Fahrzeugs vor einem Betriebszyklus in einem Depot vorzuladen.

Grundsätzlich ist das Verfahren auch bei Hybridfahrzeugen einsetzbar, die zusätzlich zur Antriebsbatterie und zu einem oder mehreren elektrischen Antriebsmotoren einen Verbrennungsmotor zum Generieren elektrischer Energie und/oder von unmittelbarer mechanischer Antriebsleistung umfassen. Bei Powersplit-Hybridfahrzeugen umfasst der mindestens eine batteriebelastungsrelevante Regelparameter insbesondere auch die Aufteilung der Bezugsleistung auf die Batterie und den Verbrennungsmotor.

Das Verfahren ist zum Betreiben eines Fahrzeugs geeignet, das in einem Linienbetrieb eingesetzt ist, wobei prognostizierte Fahrdaten einer befahrenen Linie oder zu befahrender Linien bei der Bestimmung des Regelparameters berücksichtigt werden. Anhand solcher Informationen kann beispielsweise der Ladestand der Antriebsbatterie derart geregelt werden, dass zum einen auf der gesamten Linie ausreichend Antriebsenergie zur Verfügung steht und zum anderen in entsprechenden Passagen bei geringstmöglicher Belastung der Antriebsbatterie möglichst viel Bremsenergie rel<uperiert werden kann. Ähnlicherweise kann bei Trolleybussen der Ladezustand der Antriebsbatterie im Hinblick auf einen bevorstehenden Ladevorgang in einem Teilabschnitt mit Oberleitung konditioniert werden.

Das Verfahren kann auch dazu genutzt werden, im Rahmen einer Flotte gleichartige Fahrzeuge anhand des abgeschätzten Gesundheitszustands ihrer Antriebsbatterie einzelnen Linien zuzuweisen. So können beispielsweise Fahrzeuge, deren Antriebsbatterien einen unterdurchschnittlichen Gesundheitszustand aufweisen, Linien zugewiesen werden, denen eine geringe Belastung der Antriebsbatterie zugeordnet ist, während Fahrzeuge, deren Antriebsbatterien einen überdurchschnittlichen Gesundheitszustand aufweisen, Linien mit höherer Belastung zugewiesen werden. Alternativ wird ein Batterietausch zwischen zwei oder mehreren Fahrzeugen empfohlen. Durch die periodische Neuabschätzung des Gesundheitszustands werden überschiessende Effekte solcher Massnahmen vermieden: aufgrund der aktualisierten Abschätzungen für alle Fahrzeuge der Flotte kann jederzeit eine Neuzuweisung stattfinden, so dass über die gesamte Flotte gesehen ein Ausgleich der Belastungen erfolgt.

Bevorzugt umfasst der Regelparameter einen oder mehrere der folgenden Parameter:

a) einen Ladezustand;

b) eine Ladeleistung;

c) eine Bezugsleistung aus der Antriebsbatterie;

d) eine maximale Beschleunigung des Fahrzeugs;

e) einen maximalen Rel<uperationsstrom des Fahrzeugs;

f) eine Verbrauchsleistung für einen Bremswiderstand;

g) einen Betriebsparameter eines Heizungs-, Lüftungs- und/oder Klimatisierungssystems des Fahrzeugs;

h) einen Betriebsparameter einer Innenbeleuchtung und/oder eines Innenraum-Informationssystems und/oder sonstiger Nebenverbraucher des Fahrzeugs;

i) einen Betriebsparameter eines Wärmemanagementsystems für die Antriebsbatterie.

Beim Ladezustand und bei der Ladeleistung kann es sich beim Regelparameter um einen Vorgabewert oder um einen Minimal- bzw. Maximalwert handeln. Einen möglichen Regelparameter bildet somit die maximale oder optimale Entladetiefe (DOD). Die Ladeleistung kann sich sowohl auf den stationären Bezug oder auf den Bezug aus einer Oberleitung beziehen. Die Bezugsleistung aus der Antriebsbatterie kann dann als Regelparameter vorgegeben werden, wenn während des Fahrbetriebs eine unmittelbare Bezugsmöglichl<eit von Primärenergie besteht, insbesondere von einer Oberleitung, aus einer Brennstoffzelle oder - bei einem Hybridfahrzeug - von einem Verbrennungsmotor, entweder direkt als Antrieb oder indirekt über einen Generator.

Ist der vorgegebene maximale Rel<uperationsstrom erreicht und wird zusätzliche Bremsleistung benötigt, kann ein Bremswiderstand zur Umwandlung überschüssiger Energie in Wärme und/oder ein zusätzliches mechanisches Bremssystem zum Einsatz gelangen. Beim Betriebsparameter des HLI< kann es sich um eine Vorgabetemperatur des Fahrzeuginnenraums handeln. Bevorzugt wird aber das HLI<-System kurzzeitig, in Betriebsphasen hoher Belastung, mit reduzierter Leistung betrieben oder ausgeschaltet.

Ist ein Wärmespeicher oder ein Kältespeicher vorhanden, so kann dieser in Phasen mit geringer Belastung der Antriebsbatterie oder mit überschüssiger Rekuperationsenergie gefüllt und in Phasen mit hoher Belastung für den Betrieb des HLI<-Systems genutzt werden. Anstelle von Betriebsparametern des HLI<-Systems kann eine maximale Leistung der Gesamtheit der Nebenverbraucher vorgegeben werden.

Auch das Wärmemanagementsystem für die Antriebsbatterie lässt sich in gewissen Grenzen beeinflussen, um kurzzeitige Belastungsspitzen zu vermeiden, z. B. indem ein entsprechendes Aggregat kurzzeitig in seiner Leistung reduziert oder ausgeschaltet wird, wobei auch situativ höhere Temperaturniveaus akzeptiert werden können.

Einflüsse eines Ausschaltvorgangs oder einer Leistungsreduktion können durch eine entsprechende Leistungserhöhung im Vorfeld oder im Nachgang einer solchen Massnahme kompensiert werden. Ist der Fahrzeugsteuerung eine bevorstehende Massnahme bereits bekannt, z. B. beim Betrieb auf einer bekannten Linie, kann die Kompensation ganz oder teilweise antizipierend erfolgen.

Weitere Regelparameter betreffen das Auslösen von Hinweisen an den Fahrzeugführer, z. B. in Bezug auf eine Sollgeschwindigkeit oder die Einleitung eines Bremsvorgangs.

Wird das erfindungsgemässe Verfahren im Zusammenhang mit einem Trolleybus mit integrierter Antriebsbatterie eingesetzt, bildet insbesondere die aus der Oberleitung aufzunehmende Leistung einen der Regelparameter, denn generell kann durch eine Erhöhung des Anteils der benötigten Leistung, der aus der Oberleitung bezogen wird, die Batterie entlastet und damit die Alterung verzögert werden, während gleichzeitig aufgrund der höheren Widerstände im Oberleitungsnetz die benötigte Gesamtenergie steigt. Durch eine geeignete Variation des Anteils der Bezugsleistung aus der Oberleitung, gemäss dem erfindungsgemässen Verfahren, kann somit die gewünschte Balance aus Energieeffizienz und Batterielebensdauer erreicht werden. Auch lassen sich Lastspitzen im Oberleistungsnetz dadurch günstig beeinflussen.

Eine erfindungsgemässe Anordnung zum Betreiben eines elektrisch betriebenen Fahrzeugs gemäss dem erfindungsgemässen Verfahren umfasst:

a) das elektrisch betriebene Fahrzeug mit einer Antriebsbatterie zum Antreiben mindestens eines Antriebsaggregats des Fahrzeugs; und

b) eine Messeinrichtung zum Erheben eines effektiven Gesundheitszustandes der Antriebsbatterie des Fahrzeugs;

wobei das Fahrzeug folgendes umfasst:

c) eine Verarbeitungseinrichtung zum Ermitteln eines abgeschätzten Gesundheitszustands der Antriebsbatterie;

d) eine I<alibrationseinrichtung;

e) eine Fahrzeugsteuerung zum Betreiben des Fahrzeugs;

wobei

- die Verarbeitungseinrichtung dazu konfiguriert ist, den zuletzt erhobenen effektiven Gesundheitszustand von der Messeinrichtung zu empfangen, Nutzungsdaten des Fahrzeugs von der Fahrzeugsteuerung zu empfangen und den abgeschätzten Gesundheitszustand ausgehend vom effektiven Gesundheitszustand und unter Berücksichtigung der Nutzungsdaten seit einer letzten Ermittlung des abgeschätzten Gesundheitszustands, durch Anwendung eines Alterungsmodells für die Antriebsbatterie zu ermitteln;

- die I<alibrationseinrichtung dazu konfiguriert ist, das Alterungsmodell anhand des von der Einrichtung empfangenen erhobenen effektiven Gesundheitszustandes zu kalibrieren; und

- die Fahrzeugsteuerung dazu konfiguriert ist, mindestens einen batteriebelastungsrelevanten Regelparameter anhand des abgeschätzten Gesundheitszustands und eines aktuellen Antriebsenergiebedarfs zu bestimmen.

Die Messeinrichtung ist insbesondere stationär angeordnet, z. B. in einem Wartungszentrum oder in einer Werkstätte. Der zuletzt erhobene effektive Gesundheitszustand kann direkt von der Messeinrichtung empfangen werden oder indirekt, z. B. von der Fahrzeugsteuerung, der zuvor diese Daten von der Messeinrichtung oder von einem entsprechenden Server übermittelt wurden.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1 Ein schematisches Blockdiagramm einer Ausführungsform einer erfindungsgemässen Anordnung zum Betreiben eines elektrisch betriebenen Fahrzeugs;

Fig. 2 eine schematische Darstellung des erfindungsgemässen Verfahrens zur Optimierung der Lebensdauer einer Antriebsbatterie eines Fahrzeugs;

Fig. 3 eine schematische Darstellung der Leistungsbilanz der Quellen und Lasten des elektrisch betriebenen Fahrzeugs;

Fig. 4A    die resultierende Leistungsaufteilung bei einer Betriebsstrategie zur Maximierung des Gesamtenergieverbrauchs;

Fig. 4B    die resultierende Leistungsaufteilung bei einer Betriebsstrategie zur Maximierung der Batterielebensdauer; und

Fig. 5    Ergebnisse einer Lebenszeit-Simulation zum Vergleich der Ergebnisse des erfindungsgemässen Verfahrens mit einem Verfahren ohne regelmässige Rekalibration.

Grundsätzlich sind in den Figuren gleiche Teile mit gleichen Bezugzeichen versehen.

**Wege zur Ausführung der Erfindung**

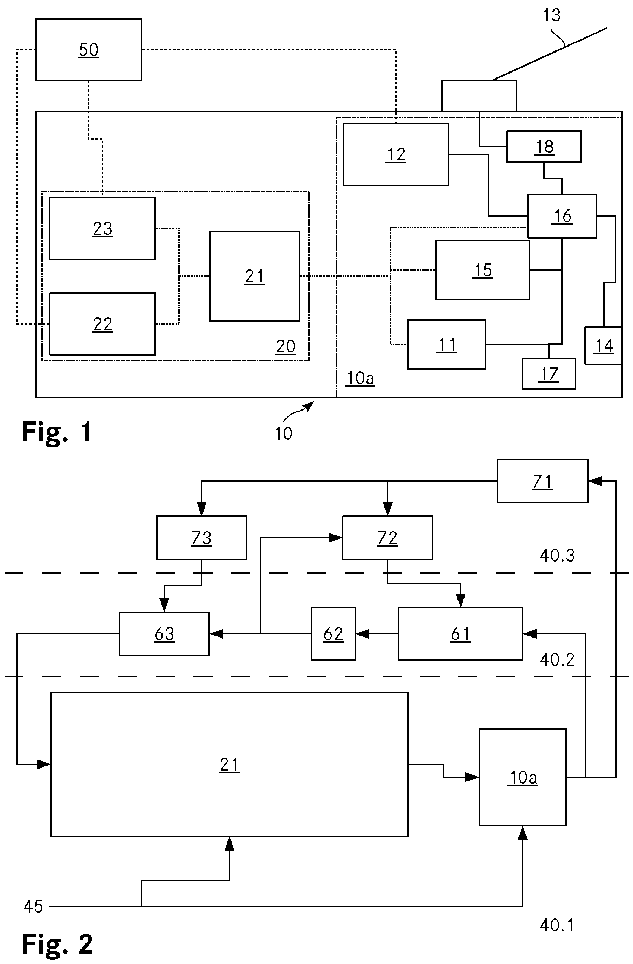

Die Figur 1 zeigt ein schematisches Blockdiagramm einer Ausführungsform einer erfindungsgemässen Anordnung zum Betreiben eines elektrisch betriebenen Fahrzeugs. Verbindungen zum Übertragen elektrischer Leistung sind durchgezogen gezeichnet, Verbindungen zum Übertragen von Steuer- und Regelsignalen strichpunktiert und Verbindungen zur (temporären) Übertragung von Messsignalen gestrichelt. Beim Fahrzeug handelt es sich um einen Trolleybus 10, der über einen Stromabnehmer 13 im Fahrbetrieb, während der Fahrt und im Stillstand, Strom von einer Oberleitung aufnehmen kann. Der Trolleybus 10 verfügt auch über einen Ladeanschluss 14, der eine kabelgebundene Stromversorgung ermöglicht, z. B. in einem Depot, wo der Trolleybus 10 ausserhalb seiner Betriebsphasen abgestellt wird.

Die elektrische Energie wird in einer Antriebsbatterie 12 des Trolleybusses 10 gespeichert. Es handelt sich dabei in an sich bekannter Weise um Li-Ionen-Batterien mit einer Kapazität von beispielsweise 72 kWh, was das Befahren von längeren Teilstrecken ohne Oberleitung ermöglicht. Nebst der Antriebsbatterie 12 und dem Ladeanschluss 14 umfassen die Betriebskomponenten 10a des Trolleybusses 10 das Antriebsaggregat 11, das mehrere von der Antriebsbatterie 12 gespeiste Elektromotoren umfasst, Nebenverbraucher 15 (z. B. Heizung, Lüftung und Klima, Beleuchtung, On-Board-Entertainment etc.), einen Bremswiderstand 17 und einen Stromverteiler 16, über den die Antriebsbatterie 12 einerseits mit dem Stromabnehmer 13 und einem nachgeschalteten unidirektionalen Gleichspannungswandler 18 und dem Ladeanschluss 14 und andererseits mit den Verbrauchern, also dem Antriebsaggregat 11, dem Bremswiderstand 17 und den Nebenverbrauchern 15, verbunden ist. Dabei ist zu beachten, dass das Antriebsaggregat 11 im Rekuperationsbetrieb als Generator wirkt und entsprechend elektrische Energie in die Antriebsbatterie 12 zurückspeisen kann.

Der Trolleybus 10 umfasst weiter ein Steuersystem 20. Dieses beinhaltet eine Fahrzeugsteuerung 21 mit verschiedenen Steuermodulen, die zum einen das Antriebsaggregat 11 steuern und überwachen und zum anderen die weiteren Fahrzeugkomponenten inklusive die Nebenverbraucher 15. Weiter umfasst das Steuersystem 20 eine Verarbeitungseinrichtung 22 zum Abschätzen des Gesundheitszustandes der Antriebsbatterie 12 und eine Kalibrationseinrichtung 23 zum Aktualisieren des Alterungsmodells. Beide sind wiederum mit der Fahrzeugsteuerung 21 zum Empfang von Fahrzeuginformationen und zum Übermitteln von Regelparametern verbunden.

Der Trolleybus 10 lässt sich im Stillstand mit einer Messeinrichtung 50 zur Erhebung des effektiven Gesundheitszustandes der Antriebsbatterie 12 verbinden. Diese Erhebung liefert insbesondere die aktuelle (Rest-)Kapazität und erfolgt durch bekannte Verfahren, z. B. durch einen vollständigen Lade- und Entladezyklus mit Erfassung der transferierten Energie.

Die Figur 2 ist eine schematische Darstellung des erfindungsgemässen Verfahrens zur Optimierung der Lebensdauer einer Antriebsbatterie eines Fahrzeugs, namentlich des Trolleybusses 10. Das Verfahren umfasst mehrere Feedback-Loops auf unterschiedlichen zeitlichen Ebenen.

In der tiefsten Ebene 40.1 werden in an sich bekannter Weise Fahrsignale 45 und weitere Steuersignale des Fahrzeugführers (und gegebenenfalls einer Zentrale des Betreibers) erfasst und an die Betriebskomponenten 10a des Trolleybusses 10 übermittelt. Gleichzeitig werden die Fahrsignale 45 und weitere Steuersignale bzw. eine Auswahl dieser Signale an die Fahrzeugsteuerung 21 übermittelt.

In einer nächsthöheren Ebene 40.2 wird ausgehend von Signalen der Betriebskomponenten 10a (die gegebenenfalls via Fahrzeugsteuerung 21 bereitgestellt werden) anhand eines Modells eine Degradationsabschätzung 61 vorgenommen. Diese stellt ein Mass für die Degradation dar, welche die Antriebsbatterie 12 aufgrund des Fahrbetriebs und des Betriebs der Nebenverbraucher 15 seit einer letzten Aktualisierung erfahren hat. Die Degradation wird dann von einem letztbekannten Wert für den State-of-Health (SOH) abgezogen, um eine aktualisierte SOH-Abschätzung 62 des Gesundheitszustandes der Antriebsbatterie 12 zu erhalten. Gestützt auf die aktualisierte SOH-Abschätzung 62 erfolgt nun ein SOH-Vergleich 63 mit einem Sollwert. Unterschreitet die aktualisierte Abschätzung den Sollwert, müssen Massnahmen getroffen werden, um die Degradation der Antriebsbatterie 12 zu reduzieren. Überschreitet die aktualisierte Abschätzung den Sollwert, kann der Betrieb des Trolleybusses 10 stärker im Hinblick auf andere Kriterien (z. B. Gesamtenergieverbrauch, Komfortfunktionen usw.) optimiert werden. Letztlich hat das Ergebnis des SOH-Vergleichs 63 also Auswirkungen auf den Fahrbetrieb, entsprechend wird es deshalb der Fahrzeugsteuerung 21 übermittelt.

In der höchsten Ebene 40.3 wird eine effektive SOH-Messung 71 durchgeführt, bei stationärem Trolleybus 10, mit Hilfe der Messeinrichtung 50. Bestimmt wird die verbleibende Batteriekapazität und daraus, durch einen Vergleich mit der Anfangskapazität der aktuelle effektive Wert des SOH $\tilde{\Psi}_i$. Das Ergebnis dieser SOH-Messung 71 dient zum einen der Modell<alibrierung 72 des für die Degradationsabschätzung 61 herangezogenen Modells und zum anderen der Aktualisierung 73 des Referenzverlaufs, welcher im SOH-Vergleich 63 benötigt wird.

Der Referenzverlauf ergibt sich aus folgenden Grössen:

- einem vorgegebenen Gesundheitszustand $\Psi_{EOL}$ bei einer vorgegebenen Laufleistung $d_{EOL}$;

- der aktuellen Laufleistung $d$; und

- dem letztbestimmten effektiven SOH $\tilde{\Psi}_i$ bei einer Laufleistung $d_i$.

Im einfachsten Fall wird von einer linearen Abnahme des SOH ausgegangen, so dass sich der Sollwert $\Psi_d$ bei der Laufleistung $d$ wie folgt ergibt:

$$\Psi_d = \widetilde{\Psi_i} - \left(\frac{\widetilde{\Psi_i} - \Psi_{EOL}}{d_{EOL} - d_i}\right)(d - d_i).$$

Bei jeder neuen effektiven SOH-Messung 71 wird die Steigung der Abnahme also wieder neu bestimmt und die erwähnte Aktualisierung 73 vorgenommen.

Die Abnahme lässt sich grundsätzlich auch durch eine nichtlineare Beziehung parametrisieren.

Die Degradationsabschätzung 61 erfolgt gestützt auf Nutzungsdaten des Fahrzeugs. Im dargestellten Ausführungsbeispiel ergibt sich die Degradationsabschätzung aus dem Verlauf des Ladezustands der Antriebsbatterie 12 seit der letzten Ermittlung. Die Degradation kann dann mit einem Alterungsmodell berechnet werden. Geeignet dazu ist beispielsweise das frei verfügbare Tool OpenSesame, welches eine Simulation von Li-Ionen-Batterien ermöglicht (M. Beyeler, S. S. Bhoir, S. Broennimann, Y. Moullet, Open-SESAME-Battery, V1.1, https://gitlab.ti.bfh.ch/oss/esrec/open-sesame (2022)). Nebst Angaben zur Batterie (Kapazität, Zellenchemie) und zum Startzustand (SoC, SOH) fliessen Zeitreihen mit Werten des Ladezustands (State of Charge, SoC), der Eingangs- bzw. Ausgangsleistung (die sich bei ausreichender Zeitauflösung grundsätzlich aus dem SoC-Verlauf berechnen lassen) und der Zelltemperatur in die Simulation ein. Das Ergebnis enthält u.a. eine Abschätzung der Batteriedegradation für den gegebenen Zyklus.

Die Güte dieser Abschätzung wird aufgrund der Modell<alibrierung 72 iterativ verbessert: Dazu wird bei jeder SOH-Messung 71 die abgeschätzte Degradation ($\hat{\Psi}[k - 1] - \hat{\Psi}[k]$) seit der vorangegangenen SOH-Messung (als Summe der abgeschätzten Degradationen) mit der Differenz $\tilde{\Psi}[k - 1] - \tilde{\Psi}[k]$ zwischen den effektiv gemessenen SOH-Werten verglichen. Dazu wird zunächst ein Degradationsfehler wie folgt berechnet:

$$e_{\deg}[k] = \frac{\left(\widetilde{\Psi}[k - 1] - \widetilde{\Psi}[k]\right) - \left(\widehat{\Psi}[k - 1] - \widehat{\Psi}[k]\right)}{\left(\widehat{\Psi}[k - 1] - \widehat{\Psi}[k]\right)}.$$

Dieser Fehlerwert wird dann in einem PI-Regler verwendet, um einen Korrekturfaktor $\gamma_k$ zum Zeitpunkt $t_k$ wie folgt zu bestimmen:

$$\gamma_k = 1 + K_{MM}\left(e_{deg}[k] + \frac{1}{T_{MM}}\sum_{i=1}^{k} e_{deg}[i] \cdot (\tau_{meas}[i] - \tau_{meas}[i - 1])\right),$$

wobei $K_{MM}$ wie üblich die Verstärkung und $T_{MM}$ die Zeitkonstante bezeichnen. Der Korrekturfaktor wird zur Korrektur des Ergebnisses ($\hat{\Psi}[k - 1] - \hat{\Psi}[k]$) der Degradationsabschätzung 61 mit diesem multipliziert, bevor die Summation mit den vorbestimmten Degradationen zum Erhalt der aktualisierten SOH-Abschätzung 62 erfolgt.

Gleichzeitig wird bei jeder neuen SOH-Messung 71 die Summe der Degradationen wieder auf Null gesetzt, d. h. die weiteren Degradationsabschätzungen 61 werden ausgehend vom letztbestimmten effektiven SOH-Wert vorgenommen.

Im Rahmen der Fahrzeugsteuerung 21 werden nun die Ergebnisse aus dem SOH-Vergleich 63 berücksichtigt. Insbesondere wird in Abhängigkeit der angefragten Leistung (Antriebsleistung und Leistung für weitere Verbraucher) bestimmt, welcher Anteil der Leistung der Antriebsbatterie 12 entnommen wird und welcher via Stromabnehmer direkt von der Oberleitung. Steht in einem Betriebsabschnitt die Oberleitung nicht zur Verfügung, können zusätzliche Betriebsparameter (z. B. die Leistung der Nebenverbraucher 15) variiert werden. Diese Betriebsparameter lassen sich aber auch bei vorhandener Bezugsmöglichl<eit aus der Oberleitung einstellen.

Für die Berücksichtigung der Ergebnisse aus dem SOH-Vergleich 63 wird der an sich bekannte adaptive ECMS-Ansatz herangezogen (L. Guzzella, A. Sciarretta, Vehicle Propulsion Systems, Springer-Verlag Berlin Heidelberg, 2013; A. Sciarretta, L. Guzzella, Control of hybrid electric vehicles, IEEE Control Systems Magazine 27 (2) (2007) 60-70; L. Serrao, S. Onori, G. Rizzoni, ECMS as a realization of Pontryagin's minimum principle for HEV control, in: 2009 American Control Conference, 2009, pp. 3964-3969). Der Ansatz wurde für Fahrzeuge mit hybridelel<trischem Antrieb entwickelt, lässt sich aber - wie nachfolgend dargestellt - auch für Fahrzeuge mit fahrzeuggebundener Antriebsbatterie und zusätzlicher Bezugsmöglichl<eit für elektrische Energie (z. B. aus einer Brennstoffzelle oder Oberleitung) nutzen.

Bei diesem Ansatz wird durch Anwendung des Pontryagin'schen Minimumprinzips auf das Problem der optimalen Steuerung die Hamilton-Funktion $H(\cdot)$ hergeleitet. Diese Funktion ist abhängig von den Werten zweier so genannter Äquivalenzfal<toren $s_{\xi}(t)$ und $s_{\Psi}(t)$, die den Wert der beiden Zustände SOC und SOH relativ zum Energieverbrauch repräsentieren.

Der Wert von $s_{\Psi}(t)$ wird in der zweiten Ebene 40.2 bestimmt, wie nachfolgend beschrieben.

Basierend auf den Werten der beiden Äquivalenzfal<toren wird die Aufteilung zwischen Batterie- und Oberleitungsstrom bestimmt, die einen optimalen Ausgleich zwischen einem geringstmöglichen Gesamtenergieverbrauch und einer maximalen Batterielebensdauer, unter Berücksichtigung der angestrebten Batterielebensdauer, ergibt. Die Aufteilung wird durch eine Minimierung der lokalen Hamilton-Funktion $H(\cdot)$ erreicht. Die spezifische Form der Hamilton-Funktion hängt vom jeweiligen Fahrzeug und Antrieb ab. Ein Beispiel für das dargestellte Ausführungsbeispiel wird unten angegeben.

Die Betriebsstrategie wird nun mit Hilfe eines PI-Reglers angepasst, indem $s_{\xi}(t)$ in Abhängigkeit des aktuellen Werts $\xi(t)$ des SOC angepasst wird: Wenn $\xi(t)$ einen I<onstanten Referenzwert $\xi_{ref}$ übersteigt, favorisiert die Betriebsstrategie eine Entladung der Antriebsbatterie 12, während bei einem Unterschreiten des Referenzwerts bevorzugt elektrische Energie aus der Oberleitung aufgenommen wird. Dazu wird der Äquivalenzfal<tor für den SOC wie folgt berechnet:

$$e_{\xi}(t) = \xi_{ref} - \xi(t),$$

$$s_{\xi}(t) = s_{\xi,FF}\big(s_{\Psi}(t)\big) + K_{\xi}(\xi(t)) \cdot \left(e_{\xi}(t) + \frac{1}{T_{\xi}} \int_{t_0}^{t} e_{\xi}(t)dt\right).$$

Dabei bezeichnen $K_{\xi}$ und $T_{\xi}$ wie üblich die Verstärkung bzw. die Zeitkonstante des PI-Reglers. Die Verstärkung $K_{\xi}$ kann vom SOC abhängig sein, um die Aggressivität des Reglers in der Nähe der SOC-Grenzen zu erhöhen, während sie in den SOC-Bereichen dazwischen reduziert ist. Die Zeitkonstante $T_{\xi}$ sollte langsamer gewählt werden als eine entsprechende Zeitkonstante der erwarteten Störungen. Die Feed-Forward-Komponente $s_{\xi,FF}(s_{\Psi}(t))$ wird addiert, um den Einfluss des Regelkreises für die Batteriegesundheit (Ebene 40.2) auf den Regelkreis für die Betriebsstrategie (Ebene 40.1) zu kompensieren. Anhand von Simulationen hat sich ergeben, dass die Feed-Forward-Komponente beispielsweise wie folgt definiert werden kann:

$$s_{\xi,FF}(s_{\Psi}) = 1.5 \cdot 10^{-11} \cdot s_{\Psi} + 800.$$

Diese Definition trägt der Tatsache Rechnung, dass bei einem hohen Wert für den Äquivalenzfal<tor $s_{\Psi}$ für die Batteriegesundheit auch ein höherer Wert für den anderen Äquivalenzfal<tor $s_{\xi}$ notwendig ist, um einen ladungserhaltenden Betrieb der Antriebsbatterie zu ermöglichen.

Auf der ersten Ebene 40.1 muss der Regler auf Änderungen der angeforderten Leistung reagieren können, das Al<tualisierungsintervall kann entsprechend z. B. auf 1 s gesetzt werden.

Der Regelkreis für die Batteriegesundheit in der zweiten Ebene 40.2 dient dazu, die SOH-Trajektorie der Antriebsbatterie 12 nahe des Referenzverlaufs zu halten. In dieser Ebene reicht eine Aktualisierung nach jeder Fahrphase aus, eine Aktualisierung erfolgt somit in der Regel jeweils nach einigen Stunden. Aufgrund der langsamen Batteriealterung ergeben sich auch Abweichungen von der SOH-Referenztrajel<torie vergleichsweise langsam.

Mit dem erwähnten Modell für die Batteriealterung ergibt sich aus der Trajektorie $\vec{\xi}$ des SOC seit der letzten Aktualisierung der Wert $\Delta\hat{\Psi}$ für die Degradationsabschätzung 61. Dieser wird mit dem erwähnten Korrekturfaktor $\gamma_k$ multipliziert. Der Wert $\hat{\Psi}$ für die aktualisierte SOH-Abschätzung 62 ergibt sich dann durch eine Summation der Degradationsabschätzungen 61.

Die Abweichung der aktuellen SOH-Abschätzung 62 vom entsprechenden Referenzwert ergibt sich als

$$e_\Psi[j] = \Psi_{ref}[j] - \widehat{\Psi}[j],$$

was wie folgt in einen PI-Regler einfliesst:

$$u_\Psi[j] = u_{\Psi,0} + K_\Psi \cdot \left( e_\Psi[j] + \frac{1}{T_\Psi} \sum_{i=1}^{j} e_\Psi[i] \cdot (\tau_{tr}[i] - \tau_{tr}[i-1]) \right).$$

Wiederum bezeichnen $u_{\psi,0}$ den Startwert des Reglers, $K_\Psi$ die Verstärkung und $T_\Psi$ die Zeitkonstante.

Es hat sich gezeigt, dass die Empfindlichkeit der Betriebsstrategie in Bezug auf eine Änderung des Äquivalenzfal<tors $s_\psi$ am besten auf einer logarithmischen Skala dargestellt wird, entsprechend wird das Ergebnis der zweiten Ebene 40.2 zu einem Zeitpunkt $\tau[j]$ wie folgt definiert:

$$s_\Psi[j] = 10^{u_\Psi[j]}.$$

Im Rahmen einer Simulationsstudie wurde das erfindungsgemässe Verfahren anhand eines Trolleybusses geprüft, der mit Hilfe seines Stromabnehmers Strom von einer Gleichstrom-Oberleitung beziehen und gleichzeitig elektrische Energie in seiner Antriebsbatterie 12 speichern kann. Aufgrund seines unidirektionalen Gleichspannungswandlers ist eine Rückspeisung von Energie ins Netz nicht möglich. Der Antriebsstrang ist somit topologisch betrachtet sehr ähnlich wie ein Serienhybrid-Antriebsstrang, wo ein Motor-Generator die Rolle des Netzes zum Wiederaufladen der Antriebsbatterie innehat. Der betrachtete Trolleybus hat folgende Kennwerte:

| | |
|---|---|
| Fahrzeuglänge | 18.7m |
| Fahrgewicht | 18.8 t |
| max. Fahrgastzahl | 163 |
| Zellenchemie Antriebsbatterie | LTO |
| Batterie-Zellenkapazität | 23 Ah |
| Batteriel<onfiguration | 324s 4p |

Im Rahmen der Simulationsstudie wurde der Betrieb des Busses auf verschiedenen Routen in realistischen, alltäglichen Fahrmissionen betrachtet. Das zugrundeliegende Modell ist im Artikel F. Widmer, A. Ritter, P. Duhr, C. H. Onder, Battery lifetime extension through optimal design and control of traction and heating systems in hybrid drivetrains, eTransportation 14 (2022) 100196, https://doi.org/10.1016/j.etran.2022.100196, Kapitel 2, beschrieben.

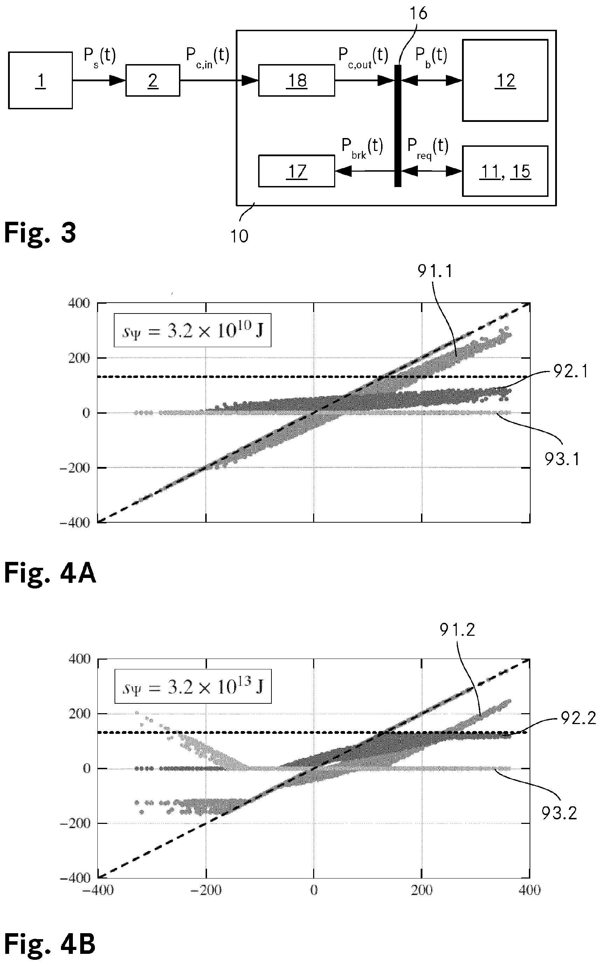

Für die Leistungsbilanz werden die in der Figur 3 schematisch dargestellten Komponenten berücksichtigt:

- einen Speisepunkt 1, von welchem der Trolleybus 10 über ein Netz 2 mit Strom versorgt wird;
- den Gleichspannungswandler 18;
- den Stromverteiler 16, über welchen die Leistungsflüsse zwischen den einzelnen Quellen und Verbrauchern laufen;
- die Antriebsbatterie 12;
- das Antriebsaggregat 11 und die Nebenverbraucher 15; und
- den Bremswiderstand 17.

Die Pfeile geben den möglichen Energiefluss wieder. Es ergibt sich folgende Leistungsbilanz:

$$P_{c,out}(t) + P_b(t) = P_{req}(t) + P_{brk}(t), \tag{1}$$

wobei $P_{c,out}(t)$ die Leistung am Ausgang des Gleichspannungswandlers 18 bezeichnet, $P_b(t)$ die Entladeleistung der Antriebsbatterie 12, $P_{req}(t)$ die benötigte Leistung des Antriebsaggregats 11 und der Nebenverbraucher 15 und $P_{brk}(t)$ die Leistung, die im Bremswiderstand 17 verbraucht wird.

Geht man davon aus, dass sich $P_{req}(t)$ aus der Fahrmission und den sonstigen Bedürfnissen (HLI< usw.) ergibt, bestehen zwei Freiheitsgrade, namentlich der Leistungsbezug aus der Antriebsbatterie 12 und die im Bremswiderstand 17 zu vernichtende Energie. Für die Anwendung auf den Trolleybus werden deshalb die Parameter $P_b(t)$ und $P_{brk}(t)$ als Eingangsgrössen betrachtet. Die Leistung des Bremswiderstands $P_{brk}(t)$ ist nicht negativ:

$$P_{brk}(t) \geq 0.$$

$$(2)$$

Die Batterie kann sowohl Energie speichern als auch abgeben.

Wie oben angegeben, haben die Lithium-Titanat-Oxid-Batteriezellen (LTO) der Antriebsbatterie 12 des Trolleybusses 10 eine Kapazität von 23 Ah. Die Antriebsbatterie 12 besteht aus 1296 Zellen in einer 324-seriell-4-parallel-I<onfiguration. Das verwendete Batteriemodell umfasst eine ideale Spannungsquelle $U_{b,OC}(t)$ in Serie mit einem Innenwiderstand $R_b(t)$. Der Wert sowohl der Leerlaufspannung des Innenwiderstands variieren mit dem Ladezustand (SOC). Die entsprechenden Verläufe ergeben sich aus dem erwähnten OpenSESAME-Paket, skaliert für die spezifische Batteriel<onfiguration. Der Strom, welcher zur Abgabe einer bestimmten Entladeleistung $P_b(t)$ benötigt wird, ergibt sich wie folgt:

$$I_b(t) = \frac{U_{b,oc}(t) - \sqrt{U_{b,oc}(t)^2 - 4 \cdot P_b(t) \cdot R_b(t)}}{2 \cdot R_b(t)}.$$

$$(3)$$

Der Ladezustand SOC, bezeichnet mit ^(t), bezeichnet das Verhältnis zwischen der aktuellen Ladung und der maximalen Ladekapazität $Q_b(t)$. Er ergibt sich aus folgender Differentialgleichung:

$$\frac{d}{dt}\xi(t) = -\frac{I_b(t)}{Q_b(t)} = -\frac{I_b(t)}{\Psi(t) \cdot Q_{b,init}},$$

wobei $\Psi(t)$ wie oben definiert den SOH bezeichnet.

Nebst der abnehmenden Kapazität äussert sich die Alterung der Antriebsbatterie 12 auch in einem erhöhten Innenwiderstand. Im Rahmen der Simulationsstudie wird dieser Effekt ebenfalls berücksichtigt. Anstatt den Verlauf des SOR separat zu berechnen, wird an dieser Stelle jedoch vereinfachend angenommen, dass der SOR linear mit dem SOH zusammenhängt. Dieser lineare Zusammenhang wurde aufgrund vorangehenden Experimenten mit dem erwähnten Paket OpenSESAME bestimmt. Das erwähnte Paket OpenSESAME ermöglicht aber ohne Weiteres auch eine Berechnung des Innenwiderstands, so dass diese Grösse bei Bedarf in die Simulation bzw. in ein erfindungsgemässes Betriebsverfahren integriert werden kann.

Letztlich ermöglicht OpenSESAME eine Bestimmung der Degradation der Antriebsbatterie über einen bestimmten Zyklus, in Abhängigkeit der Verläufe der Lade-/Entladeleistung, des SOC und der Zelltemperatur, wobei der Nutzungszyklus einer Batterie in ein äquivalentes Set von Subzyklen unterteilt und die Degradation als Superposition von Zyklus- und I<alendarischer Alterung bestimmt wird.

Der simulierte Trolleybus 10 umfasst ein leistungsfähiges System zur Temperierung der Batteriezellen. Mit derzeit verfügbaren Systemen lässt sich die Zelltemperatur in einem relativ schmalen Band, z. B. zwischen 10 °C und 25 °C halten, wobei die Alterung von LTO-Zellen nicht sehr sensitiv auf unterschiedliche Temperaturen in diesem Band reagiert. Bei einer bestimmten Aussentemperatur kann die resultierende Zellentemperatur zudem in einem engen Fenster von ca. 2-3 °C gehalten werden. Die Änderungen der Batterietemperatur als Folge unterschiedlicher Aussentemperaturen können somit als externe Störungen betrachtet und in die Fahrmission integriert werden. Zur Berechnung der I<alendarischen Alterung der Antriebsbatterie 12 werden Standzeiten des Trolleybusses 10 ausserhalb der Fahrmissionen, in denen sich das Fahrzeug in der Regel im Depot befindet, mit einer konstant vorgegebenen Temperatur modelliert.

In einer Erweiterung des beschriebenen Verfahrens kann aber beispielsweise das Temperaturmanagement der Batterie mit weiteren Regelparametern in das Betriebsverfahren integriert werden.

Das Netz 2, welches elektrische Leistung vom Speisepunkt 1 über den Stromabnehmer 13 zum Gleichspannungswandler 18 des Trolleybusses 10 überträgt, wird als ideale Spannungsquelle $U_{g,OC}$ in Serie mit einem Leitungswiderstand $R_g$ modelliert. Entsprechend ergibt sich für die Leistung, die den Gleichspannungswandler 18 erreicht:

$$P_{c,in}(t) = P_s(t) - \frac{R_g}{U_{g,OC}^2} \cdot P_s(t)^2,$$

$$(4)$$

wobei $P_s(t)$ die Leistung am Speisepunkt 1 repräsentiert.

Der Netzstrom $I_g(t)$ ist beschränkt, um eine übermässige Abnutzung aufgrund Wärmeentwicklung zwischen dem Stromabnehmer 13 und der Oberleitung zu vermeiden. Die obere Grenze $\overline{I_g}$ hängt von der Fahrzeuggeschwindigkeit $v(t)$ ab und deren Einhaltung wird durch die Fahrzeugsteuerung 21 sichergestellt.

Die Fahrstrecke kann Abschnitte umfassen, in denen keine Oberleitung verfügbar ist. Dem wird mit einer zweiwertigen Indikatorfunktion $\chi(t)$ Rechnung getragen, die den Wert 1 annimmt, wenn eine Oberleitung verfügbar ist und den Wert 0, wenn dies nicht der Fall ist. Somit ergeben sich folgende Bedingungen:

$$0 \leq P_s(t) \leq \chi(t) \cdot \overline{I_g}\big(v(t)\big) \cdot U_{g,OC}.$$

$$(5)$$

Der unidirektionale Gleichspannungswandler 18 wird durch ein affines Effizienzmodell repräsentiert. Für die Leistung, die an dessen Ausgang verfügbar ist, ergibt sich

$$P_{c,out}(t) = \eta_c \cdot P_{c,in}(t) - P_0,$$

$$(6)$$

wobei die Konstanten $\eta_c$ und $P_0$ die Konvertereffizienz bzw. die Leerlaufverluste bezeichnen.

Gemäss dem ECMS-Ansatz wird die optimale Leistungsaufteilung (Power Split) durch die Minimierung der so genannten Hamilton-Funktion berechnet, die sich aus der Anwendung des Pontryaginschen Minimumprinzips (PMP) ergibt. Zur Herleitung der Hamilton-Funktion werden im Rahmen des Modells wie vorstehend erwähnt nur die Zustandsvariablen SOC und SOH berücksichtigt, so dass Betriebszustände, die für den Innenwiderstand besonders nachteilig sind, nicht spezifisch verhindert werden. Wegen der erwähnten Korrelation mit für den kapazitätsbezogenen SOH schädlichen Betriebszuständen, führt dies in der Regel aber nicht zu Problemen.

Für die Zustandsaktualisierungsfunktion des SOH wird die zeitbasierte momentane Degradation $\psi(t)$ wie folgt eingeführt:

$$\frac{d}{dt}\Psi(t) = -\psi(t).$$

Im Artikel F. Widmer, A. Ritter, P. Duhr, C. H. Onder, Battery lifetime extension through optimal design and control of traction and heating systems in hybrid drivetrains, eTransportation 14 (2022) 100196, https://doi.org/10.1016/j.etran.2022.100196, ist beschrieben, wie der zyklenbasierte Ansatz von OpenSESAME transformiert werden kann, um folgende Abschätzung für die Degradation zu erhalten:

$$\psi(t) \approx \zeta_{cyc,\xi}\big(\xi(t)\big) \cdot \zeta_{cyc,\vartheta_b}\big(\vartheta_b(t)\big) \cdot \zeta_{cyc,\delta}\big(\delta(t)\big) \cdot \zeta_{cyc,C}\big(C(t)\big) \cdot \frac{|C(t)| \cdot \Delta\Psi_{cyc,0}}{2 \cdot \Psi(t)}$$
$$+ \zeta_{cal,\xi}\big(\xi(t)\big) \cdot \zeta_{cal,\vartheta_b}\big(\vartheta_b(t)\big) \cdot \psi_{cal,0},$$

$$(7)$$

wobei die Skalierungsfaktoren $\zeta_{cyc,\xi}$, $\zeta_{cyc,\vartheta_b}$, $\zeta_{cyc,\delta}$ und $\zeta_{cyc,C}$ dazu dienen, die Degradation $\Delta\Psi_{cyc,0}$ eines Referenzzyklusses in Abhängigkeit des SOC, der Zelltemperatur, der Entladungstiefe (depth of discharge, DOD) $\delta(t)$ und der C-Rate $C(t)$ der Antriebsbatterie zu skalieren. Ähnlicherweise wird mit den Skalierungsfaktoren $\zeta_{cal,\xi}$ und $\zeta_{cal,\vartheta_b}$ der Referenzwert $\psi_{cal,0}$ für die kalendarische Alterung in Abhängigkeit des SOC und der Zellentemperatur skaliert. Die C-Rate ist dabei relativ zur nominalen Batteriekapazität definiert, also

$$C(t) = \frac{I_b(t)}{Q_{b,init}}.$$

Bei der Bestimmung der optimalen Leistungsaufteilung zum Zeitpunkt $t$ können $\xi(t)$, $\vartheta_b(t)$ und $\Psi(t)$ als gegeben betrachtet werden. Zusätzlich, wie ebenfalls im erwähnten Artikel F. Widmer et al. beschrieben, kann für die Entladungstiefe (DOD) als vereinfachende Annahme ein konstanter Wert $\delta_0$ gewählt werden. Somit können folgende zwei neuen Variablen eingeführt werden:

$$a_{deg}\big(\xi(t), \vartheta_b(t), \Psi(t)\big) = \zeta_{cyc,\xi}(\cdot) \cdot \zeta_{cyc,\vartheta_b}(\cdot) \cdot \zeta_{cyc,\delta}(\cdot) \cdot \frac{\Delta\Psi_{cyc,0}}{2 \cdot \Psi(t)},$$

$$b_{deg}\big(\xi(t), \vartheta_b(t)\big) = \zeta_{cal,\xi}(\cdot) \cdot \zeta_{cal,\vartheta_b}(\cdot) \cdot \psi_{cal,0}.$$

Daraus ergibt sich unmittelbar:

$$\psi(t) \approx a_{deg}(\cdot) \cdot \zeta_{cyc,C}\big(C(t)\big) \cdot |C(t)| + b_{deg}(\cdot).$$

$$(8)$$

Die vorgenannten Vereinfachungen werden für die Bestimmung der optimalen Leistungsaufteilung durch Minimieren der Hamilton-Funktion vorgenommen. Für die Schätzung der Degradation auf der zweiten Ebene werden aber direkt die zyklenbasierten OpenSESAME-Modelle verwendet. (Die OpenSESAME-Modelle werden in der hier präsentierten Simulationsstudie ebenfalls verwendet, um die tatsächliche Alterung der Batterie zu berechnen.)
Es ergibt sich also folgendes für die Zustandsal<tualisierungsfunl<tion:

$$\frac{d}{dt}\begin{bmatrix} \xi(t) \\ \Psi(t) \end{bmatrix} = \begin{bmatrix} -\dfrac{I_b(t)}{\Psi(t) \cdot Q_{b,init}} \\ -\psi(t) \end{bmatrix}.$$

Im Hinblick auf die Minimierung des Gesamtenergieverbrauchs ergibt sich aus dem Pontryaginschen Minimumprinzip für die Hamilton-Funktion folgendes:

$$H(\cdot) = P_s(\cdot) + \lambda(\cdot)^T \cdot \begin{bmatrix} -\dfrac{I_b(\cdot)}{\Psi(\cdot) \cdot Q_{b,init}} \\ -\psi(\cdot) \end{bmatrix},$$

wobei zugunsten einer einfacheren Lesbarkeit alle mathematischen Abhängigkeiten weggelassen wurden. Die Äquivalenzfal<toren $s_\xi(t)$ und $s_\Psi(t)$ werden als negative Werte der entsprechenden Co-Zustandsvariablen $\lambda(t)$ eingeführt. Es ergibt sich somit folgendes Minimierungsproblem:

$$\underset{P_b, P_{brk}}{\arg\min}\left( P_s\big(P_{req}, P_b, P_{brk}\big) + \frac{s_\xi}{\Psi \cdot Q_{b,init}} \cdot I_b(P_b, \xi, \Psi, \Phi) + s_\Psi \cdot \psi(P_b, \xi, \theta_b, \Psi, \Phi)\right),$$

wobei die Zeitabhängigkeit aus Übersichtsgründen bei allen Variablen weggelassen wurde. Das Ergebnis entspricht der optimalen Leistungsaufteilung.

Die Argumente ergeben sich aus den obenstehenden Gleichungen:

- $P_s(P_{req}, P_b, P_{brk})$ aus den Gleichungen (1), (4) und (6);
- $I_b(P_b, \xi, \Psi, \Phi)$ aus Gleichung (3);
- $\psi(P_b, \xi, \theta_b, \Psi, \Phi)$ aus Gleichung (8).

Zudem ist die Minimierung den Bedingungen gemäss den Gleichungen (2) und (5) unterworfen, $P_{req}$, $\vartheta_b$ und die obere Grenze $\overline{\overline{P}}_s$ für den Leistungsbezug aus dem Netz ergeben sich aus der Fahrmission und die Äquivalenzfal<toren $s_\xi$ und $s_\psi$ werden durch die entsprechenden Regler gesetzt.

Die Minimierung lässt sich auf einem handelsüblichen Personal Computer mit einer Intel Core i7-8565U Prozessoreinheit in ca. 20 ms lösen. Das beschriebene Verfahren kann deshalb ohne Weiteres zur regelmässigen Bestimmung des Power Splits, in der tiefsten Ebene 40.1 des erfindungsgemässen Verfahrens eingesetzt werden (Aktualisierungsrate im Bereich von 1 s).

Wie oben beschrieben, hängt die gewählte Betriebsstrategie primär von der Abweichung des abgeschätzten Gesundheitszustandes der Antriebsbatterie von einem Sollzustand ab: Ist der Gesundheitszustand besser, wird eine Betriebsstrategie gewählt, die eine Minimierung der Gesamtenergie begünstigt; ist der Gesundheitszustand schlechter, wird eine Betriebsstrategie gewählt, die eine Maximierung der Lebensdauer der Antriebsbatterie begünstigt. Die Figuren 4A, 4B zeigen die resultierende Leistungsaufteilung bei einer Betriebsstrategie mit einer hohen Gewichtung eines geringen Gesamtenergieverbrauchs (Fig. 4A, Äquivalenzfal<tor $s_\psi = 3.2 \cdot 10^{10}$) und bei einer Betriebsstrategie mit einer hohen Gewichtung einer hohen Batterielebensdauer (Fig. 4B, Äquivalenzfal<tor $s_\psi = 3.2 \cdot 10^{13}$). Dargestellt sind jeweils in Abhängigkeit der benötigten Leistung $P_{req}$ (horizontale Achse, in kW) die Leistungswerte $P_b$ für den Energiebezug von der Antriebsbatterie bzw. die Energieeinspeicherung in die Antriebsbatterie (mittelgraue Punktwolke 91.1, 91.2), die Leistungswerte $P_{c,out}$ für den Energiebezug von der Oberleitung (dunl<elgraue Punktwolke 92.1, 92.2) und die Leistungswerte $P_{brk}$ für die Dissipation im Bremswiderstand (hellgraue Punktwolke 93.1, 93.2), jeweils auf der vertikalen Achse, in kW. Die fein gestrichelten, horizontalen Linien stellen die maximale Leistung aus der primären Stromquelle $\overline{P}_s$ bei 50 I<m/h dar, die grob gestrichelten Linien repräsentieren die angeforderte Leistung $P_{req}$.

Aus den Darstellungen geht ohne Weiteres hervor, dass bei der energieorientierten Betriebsstrategie (Fig. 4A) der Bremswiderstand nicht zum Einsatz gelangt, während er bei der batteriegesundheitsorientierten Betriebsstrategie (Fig. 4B) eingesetzt wird, um allzu hohe Ladeleistungen von mehr als ca. 180 kW zu vermeiden.

In der energieorientierten Betriebsstrategie (Fig. 4A) erfolgt der Energiebezug von der Oberleitung in einer gleichmässigen Art und Weise, mit Maximalleistungen, die deutlich geringer sind als diejenigen in der batteriegesundheitsorientierten Betriebsstrategie (Fig. 4B). Dies vermeidet Energieverluste aufgrund des deutlichen höheren Widerstands der Oberleitung verglichen mit dem Innenwiderstand der Antriebsbatterie. Sofern die Oberleitung in der batteriegesundheitsorientierten Betriebsstrategie genügend Leistung liefern kann, um den Bedarf abzudecken (hier bis ca. 130 kW), wird hier der Energiebedarf primär von der Oberleitung abgedeckt und die Antriebsbatterie primär herangezogen, wenn höhere Leistungen benötigt werden.

Im dargestellten Beispiel führt die batteriegesundheitsorientierte Betriebsstrategie zu einer Reduktion der Batteriedegradation um 31.4% und zu einem erhöhten Gesamtenergieverbrauch von 5.1%.

Das erfindungsgemässe Betriebsverfahren wurde im Rahmen mehrerer Simulationen getestet. Eine der Simulationen basierte auf 16 verschiedenen Fahrmissionen auf vier verschiedenen Busrouten, deren relevante Charakteristika durch Messungen auf einem realen Fahrzeug ermittelt wurden. Die Routen wiesen unterschiedliche Verfügbarl<eiten von elektrischer Energie aus Oberleitungen auf, zwischen ca. 50% und 100% der befahrenen Strecke. Die Routen zeichneten sich zudem durch unterschiedliche Höhendifferenzen und fahrbare Maximalgeschwindigkeiten aus. Die Auswahl der Fahrmissionen decl<te zudem alle Jahreszeiten und damit verschiedene Nutzungen des HLI<-Systems ab. Die Missionen waren durch Daten mit einer Zeitauflösung von 1 s definiert.

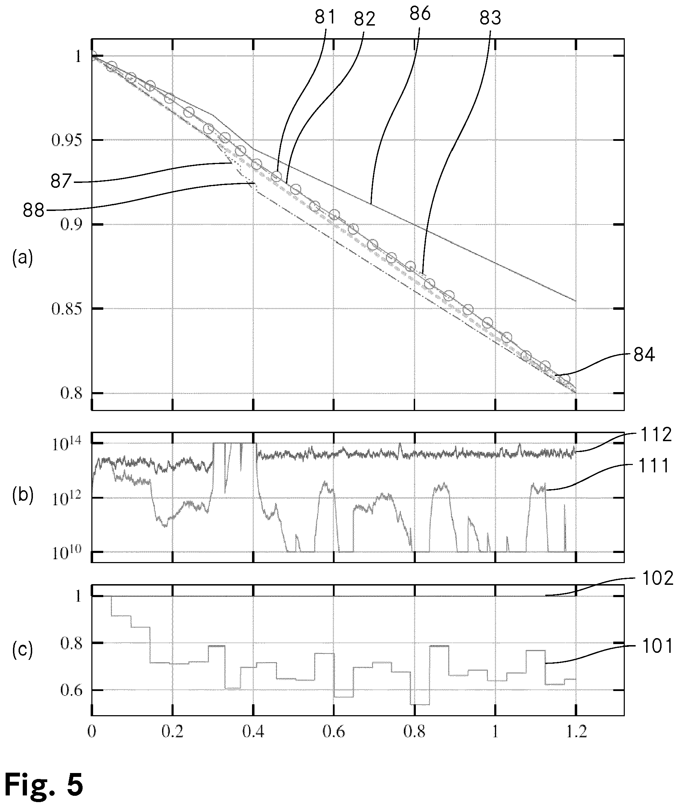

Die Figur 5 zeigt die Ergebnisse einer Lebenszeit-Simulation, wobei die Ergebnisse des erfindungsgemässen Verfahrens mit denjenigen eines Verfahrens ohne regelmässige Rekalibration verglichen werden. Die Lebenszeit-Simulation basierte auf folgendem Szenario:

- SOH-Messungen werden jeweils nach 180 Missionen, also nach ca. 6 Monaten, durchgeführt.

- Die SOH-Messungen werden mit gaussverteiltem Rauschen (Mittelwert 0, Standardabweichung $\sigma = 0.001$) überlagert.

- Der Ziel-Gesundheitszustand bei 1.2 Mio. Fahrl<ilometern beträgt 80%.

- In einer ersten Betriebsphase wird der simulierte Trolleybus auf drei Routen eingesetzt, mit einer Netzabdeckung von 90-100%. Nach ca. 0.3 Mio.km wird der Bus für 0.1 Mio. I<m auf einer Route mit einer Netzabdeckung von nur ca. 50% eingesetzt. Anschliessend wird wieder die vorherige Routenauswahl genutzt.

Dargestellt in der Figur 5 sind nun die Ergebnisse einer Simulation mit aktiver Rekalibration gemäss der Erfindung und im Vergleich dazu die Ergebnisse einer Simulation ohne regelmässige Rekalibration. Die drei Darstellungen (a) - (c) zeigen den Verlauf verschiedener Parameter als Funktion der Fahrdistanz d (in Mio. km). In der obersten Darstellung (a) ist der Wert der Batteriegesundheit (SOH) $\Psi$ dargestellt. Die Kreise entsprechen den periodischen SOH-Messungen 81. Der Verlauf 82 (durchgezogene Linie) zeigt den effektiven Verlauf der Batteriegesundheit bei aktiver Rekalibration. Es ist zu beachten, dass dieser Wert bei der realen Anwendung des erfindungsgemässen Betriebsverfahrens nur zu den Zeitpunkten der SOH-Messungen 81 effektiv bekannt ist. Zwischen diesen Zeitpunkten erfolgt der Betrieb gestützt auf eine Abschätzung 83 (gestrichelte Linie). Der Referenzverlauf 84 (gepunktete Linie) wird bei jeder SOH-Messung aktualisiert. Wie aus der Figur 5 (a) gut erkennbar sind, liegen all diese Verläufe nahe beisammen und bei der Soll-Lebensdauer der Antriebsbatterie von 1.2 Mio. I<m weist die Antriebsbatterie einen Gesundheitszustand von 80.3% auf, sehr nahe der Vorgabe von 80%.

Ohne Rekalibration wird die Batteriegesundheit im dargestellten Fall permanent unterschätzt, weil die Degradation überschätzt wird. Dies deshalb, weil dann die Degradation gemäss der Approximation (7) abgeschätzt wird, die keine von der Entladungstiefe (DOD) abhängigen Effekte berücksichtigt. Ausserdem wird der einflussreichste Skalierungsfaktor $\zeta_{cyc,C}$ durch eine stückweise lineare Funktion für positive und negative Raten von C angenähert. Es resultiert ein tatsächlicher (im realen Fall unbekannter) Verlauf 86 (durchgezogene Linie) und die Batteriegesundheit bei 1.2 Mio. Fahrl<ilometern beträgt über 85%. Analog dazu war die benötigte Gesamtenergie um 8.8% höher als im Rahmen des erfindungsgemässen Betriebsverfahrens. Die Abschätzung 87 (gestrichelte Linie) und der Referenzverlauf 88 (gepunktete Linie) verlaufen in diesem Fall deutlich tiefer als im Fall mit Rekalibration, vermögen aber die Abschätzungsfehler, die sich während der Simulation laufend aufaddieren, nicht zu kompensieren und die Differenz zum tatsächlichen SOH vergrössert sich laufend.

In der untersten Darstellung (c) der Figur 5 sind der Verlauf 101 des Parameters $\gamma$ mit Rekalibration und der Verlauf 102 des Parameters $\gamma$ ohne Rekalibration dargestellt. Es zeigt sich, dass er sich bei Werten von 0.6-0.8 einpendelt und die abgeschätzte Degradation entsprechend nach unten korrigiert. Demgegenüber verbleibt bei einer Simulation ohne Rekalibration der Parameter $\gamma$ (trivialerweise) auf einem Wert von 1.

In der mittleren Darstellung (b) der Figur 5 sind die Verläufe des Äquivalenzfal<tors $s_\Psi$ für die Batteriegesundheit (in J) mit Rekalibration (Verlauf 111) und ohne Rekalibration (Verlauf 112) dargestellt. Aufgrund der Korrektur der überschätzten Batteriedegradation können im ersten Fall deutlich tiefere Werte des Äquivalenzfal<tors für die Batteriegesundheit gewählt werden als im Fall ohne Korrektur. Im zweiten Fall wird der Schonung der Batterie durchgehend ein grosses Gewicht zugemessen, im belastenden Betriebsintervall zwischen 0.3 und 0.4 Mio. I<m kann die gesteigerte Batteriealterung innerhalb des Intervalls nicht vollständig kompensiert werden, die Kompensation erfolgt aber im Modell mit Rekalibration zuverlässig nach der Rückkehr zur vorherigen Routenauswahl. Dies zeigt, dass beim Einbezug einer Flotte mit mehreren erfindungsgemäss betriebenen Fahrzeugen die mit dem Betrieb auf unterschiedlichen Routen einhergehenen unterschiedlichen Belastungen durch eine gezielte Routenallokation der Fahrzeuge langfristig ausgeglichen werden kann.

Weitere Simulationen haben gezeigt, dass das erfindungsgemässe Verfahren aufgrund der regelmässigen Bestimmungen des effektiven Gesundheitszustands der Antriebsbatterie, der Rekalibration der Degradationsabschätzungen und der Neuberechnung der Referenzkurven auch weitere Einflüsse zuverlässig berücksichtigt, z. B. Fehlabschätzungen der I<alendarischen Degradation oder einen plötzlichen Abfall des Gesundheitszustands, z. B. aufgrund längerer Standzeiten oder einem unsachgemässen Umgang mit der Batterie.

Die Erfindung ist nicht auf das dargestellte Ausführungsbeispiel beschränkt. So lässt sich das Verfahren mit weiteren Regelparametern, z. B. bezüglich des Aufladens im stationären Zustand (z. B. im Depot zwischen Fahrmissionen) und/oder die Regelung des HLI<-Systems oder weiterer I<omponenten erweitern. Das Verfahren ist zudem nicht nur auf Trolleybusse anwendbar, sondern auch z. B. auf Hybridfahrzeuge oder reine Elektrofahrzeuge mit stationären Ladevorgängen.

Zusammenfassend ist festzustellen, dass die Erfindung ein Verfahren zur Optimierung der Lebensdauer einer Antriebsbatterie eines Fahrzeugs schafft, welches das Erreichen einer vorgegebenen Lebensdauer der Antriebsbatterie mit minimierten nachteiligen Effekten auf den Gesamtenergieverbrauch und/oder den Nutzerl<omfort sicherstellt.

**Patentansprüche**

1. Verfahren zur Optimierung der Lebensdauer einer Antriebsbatterie eines Fahrzeugs, umfassend folgende Schritte:

   a) Erheben eines effektiven Gesundheitszustandes der Antriebsbatterie mit einer ersten Periodizität;
   b) Ermitteln eines abgeschätzten Gesundheitszustands der Antriebsbatterie mit einer zweiten Periodizität, ausgehend von einem zuletzt erhobenen effektiven Gesundheitszustand, unter Berücksichtigung von Nutzungsdaten des Fahrzeugs seit einer letzten Ermittlung des abgeschätzten Gesundheitszustands, durch Anwendung eines Alterungsmodells für die Antriebsbatterie;
   c) Betreiben des Fahrzeugs anhand des abgeschätzten Gesundheitszustands und eines aktuellen Antriebsenergiebedarfs, wobei mindestens ein batteriebelastungsrelevanter Regelparameter mit mindestens einer dritten Periodizität neu bestimmt wird;

   wobei das Alterungsmodell für die Antriebsbatterie nach Erhebung des effektiven Gesundheitszustands kalibriert wird.

2. Verfahren nach Anspruch 1, **dadurch gekennzeichnet, dass** der Regelparameter anhand einer Abweichung des abgeschätzten Gesundheitszustands von einem Referenzverlauf bestimmt wird.

3. Verfahren nach Anspruch 2, **dadurch gekennzeichnet, dass** der Referenzverlauf derart bestimmt wird, dass bei einer vorgegebenen Laufleistung die Antriebsbatterie einen vorgegebenen Gesundheitszustand aufweist.

4. Verfahren nach Anspruch 2 oder 3, **dadurch gekennzeichnet, dass** der Referenzverlauf nach Erhebung des effektiven Gesundheitszustands neu berechnet wird.

5. Verfahren nach einem der Ansprüche 1 bis 4, **dadurch gekennzeichnet, dass** die zur Ermittlung des abgeschätzten Gesundheitszustands berücksichtigten Nutzungsdaten einen Verlauf eines Batterie-Ladezustands seit der letzten Ermittlung umfassen.

6. Verfahren nach einem der Ansprüche 1 bis 5, **dadurch gekennzeichnet, dass** zum Kalibrieren des Alterungsmodells der abgeschätzte Gesundheitszustand der Antriebsbatterie zum Zeitpunkt der Erhebung des effektiven Gesundheitszustands mit dem erhobenen effektiven Gesundheitszustand verglichen wird.

7. Verfahren nach einem der Ansprüche 1 bis 6, **dadurch gekennzeichnet, dass** zur Bestimmung des Regelparameters eine Optimierung im Hinblick auf eine Maximierung einer ersten Zielgrösse entsprechend einer Lebensdauer der Antriebsbatterie vorgenommen wird.

8. Verfahren nach Anspruch 7, **dadurch gekennzeichnet, dass** im Hinblick auf die Maximierung der ersten Zielgrösse ein Einfluss von Betriebsparametern auf den Gesundheitszustand der Antriebsbatterie anhand der Nutzungsdaten des Fahrzeugs und des erhobenen effektiven Gesundheitszustands bestimmt wird.

9. Verfahren nach einem der Ansprüche 1 bis 8, **dadurch gekennzeichnet, dass** zur Bestimmung des Regelparameters eine Optimierung im Hinblick auf eine Minimierung einer zweiten Zielgrösse entsprechend einem Energieverbrauch des Fahrzeugs vorgenommen wird.

10. Verfahren nach den Ansprüchen 2, 7 oder 8, und 9, **dadurch gekennzeichnet, dass** in Abhängigkeit der Abweichung des abgeschätzten Gesundheitszustands vom Referenzverlauf eine Gewichtung der ersten und der zweiten Zielgrösse in der Optimierung angepasst wird.

11. Verfahren nach einem der Ansprüche 1 bis 10, wobei eine erste Periode der ersten Periodizität länger ist als eine zweite Periode der zweiten Periodizität und wobei die zweite Periode länger ist als die dritte Periode der dritten Periodizität und wobei insbesondere

   - die erste Periode 14 Tage bis 400 Tage beträgt,
   - die zweite Periode 1 Stunde bis 24 Stunden beträgt, und/oder
   - die dritte Periode 0.1 bis 10 s beträgt.

12. Verfahren nach einem der Ansprüche 1 bis 11, **dadurch gekennzeichnet, dass** es sich beim Fahrzeug um ein batterieelel<trisches Fahrzeug handelt.

13. Verfahren nach Anspruch 12, **dadurch gekennzeichnet, dass** das Fahrzeug einen Stromabnehmer umfasst, um während eines Fahrbetriebs elektrische Energie von einer Oberleitung aufzunehmen.

14. Verfahren nach einem der Ansprüche 1 bis 13, **dadurch gekennzeichnet, dass** das Fahrzeug in einem Linienbetrieb eingesetzt ist und prognostizierte Fahrdaten einer befahrenen oder zu befahrender Linien bei der Bestimmung des Regelparameters berücksichtigt werden.

15. Verfahren nach einem der Ansprüche 1 bis 14, **dadurch gekennzeichnet, dass** der Regelparameter einen oder mehrere der folgenden Parameter umfasst:

   a) einen Ladezustand;
   b) eine Ladeleistung;
   c) eine Bezugsleistung aus der Antriebsbatterie;
   d) eine maximale Beschleunigung des Fahrzeugs;
   e) einen maximalen Rel<uperationsstrom des Fahrzeugs;
   f) eine Verbrauchsleistung für einen Bremswiderstand;
   g) einen Betriebsparameter eines Heizungs-, Lüftungs- und/oder Klimatisierungssystems des Fahrzeugs;
   h) einen Betriebsparameter einer Innenbeleuchtung und/oder eines Innenraum-Informationssystems und/oder sonstiger Nebenverbraucher des Fahrzeugs;
   i) einen Betriebsparameter eines Wärmemanagementsystems für die Antriebsbatterie.

16. Anordnung zum Betreiben eines elektrisch betriebenen Fahrzeugs, umfassend

   a) das elektrisch betriebene Fahrzeug mit einer Antriebsbatterie zum Antreiben mindestens eines Antriebsaggregats des Fahrzeugs; und
   b) eine Messeinrichtung zum Erheben eines effektiven Gesundheitszustandes der Antriebsbatterie des Fahrzeugs;

   wobei das Fahrzeug folgendes umfasst:

   c) eine Verarbeitungseinrichtung zum Ermitteln eines abgeschätzten Gesundheitszustands der Antriebsbatterie;
   d) eine I<alibrationseinrichtung;
   e) eine Fahrzeugsteuerung zum Betreiben des Fahrzeugs;

   wobei

   - die Verarbeitungseinrichtung dazu konfiguriert ist, den zuletzt erhobenen effektiven Gesundheitszustand von der Messeinrichtung zu empfangen, Nutzungsdaten des Fahrzeugs von der Fahrzeugsteuerung zu empfangen und den abgeschätzten Gesundheitszustand ausgehend vom effektiven Gesundheitszustand und unter Berücksichtigung der Nutzungsdaten seit einer letzten Ermittlung des abgeschätzten Gesundheitszustands, durch Anwendung eines Alterungsmodells für die Antriebsbatterie zu ermitteln;
   - die I<alibrationseinrichtung dazu konfiguriert ist, das Alterungsmodell anhand des von der Einrichtung empfangenen erhobenen effektiven Gesundheitszustandes zu kalibrieren; und
   - die Fahrzeugsteuerung dazu konfiguriert ist, mindestens einen batteriebelastungsrelevanten Regelparameter anhand des abgeschätzten Gesundheitszustands und eines aktuellen Antriebsenergiebedarfs zu bestimmen.

Fig. 1

Fig. 2

Fig. 3

Fig. 4A

Fig. 4B

**Fig. 5**

**EUROPÄISCHER RECHERCHENBERICHT**

Europäisches Patentamt
European Patent Office
Office européen des brevets

Nummer der Anmeldung

EP 23 15 8305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2020/164763 A1 (HOLME TIM [US]) 28. Mai 2020 (2020-05-28) | 1,6,12, 14,15 | INV. B60L58/16 |
| Y | * Absätze [0003], [0004], [0007], [0040]; Anspruch 4; Abbildung 2 * | 2-5,10, 13 | |
| A | | 7-9,11 | |
| | ----- | | |
| X | US 2022/099745 A1 (KROENER CHRISTOPH [DE] ET AL) 31. März 2022 (2022-03-31) | 16 | |
| Y | * Absätze [0003], [0095] – [0099], [0112], [0127]; Abbildungen 1,2,4,5 * | 2-5,10 | |
| | ----- | | |
| Y | US 2018/162232 A1 (BRYNGELSSON HANNA [SE] ET AL) 14. Juni 2018 (2018-06-14) * Abbildung 1 * | 13 | |
| | ----- | | |

RECHERCHIERTE SACHGEBIETE (IPC)

B60L

Der vorliegende Recherchenbericht wurde für alle Patentansprüche erstellt

| Recherchenort | Abschlußdatum der Recherche | Prüfer |
|---|---|---|
| Den Haag | 11. August 2023 | Mapp, Graham |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 8305

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-08-2023

| Im Recherchenbericht angeführtes Patentdokument | Datum der Veröffentlichung | Mitglied(er) der Patentfamilie | | Datum der Veröffentlichung |
|---|---|---|---|---|
| US 2020164763 A1 | 28-05-2020 | US | 2020164763 A1 | 28-05-2020 |
| | | WO | 2019017991 A1 | 24-01-2019 |
| US 2022099745 A1 | 31-03-2022 | CN | 114325441 A | 12-04-2022 |
| | | DE | 102020212298 A1 | 31-03-2022 |
| | | US | 2022099745 A1 | 31-03-2022 |
| US 2018162232 A1 | 14-06-2018 | CN | 107614313 A | 19-01-2018 |
| | | EP | 3307582 A1 | 18-04-2018 |
| | | JP | 2018518814 A | 12-07-2018 |
| | | JP | 2020092091 A | 11-06-2020 |
| | | US | 2018162232 A1 | 14-06-2018 |
| | | WO | 2016198103 A1 | 15-12-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20220126723 A1

**In der Beschreibung aufgeführte Nicht-Patentliteratur**

- **M. BEYELER ; S. S. BHOIR ; S. BROENNIMANN ; Y. MOULLET.** *Open-SESAME-Battery, V1.1,* 2022, https://gitlab.ti.bfh.ch/oss/esrec/open-sesame
- **L. GUZZELLA ; A. SCIARRETTA.** Vehicle Propulsion Systems. Springer-Verlag, 2013
- **A. SCIARRETTA ; L. GUZZELLA.** Control of hybrid electric vehicles. *IEEE Control Systems Magazine,* 2007, vol. 27 (2), 60-70
- **L. SERRAO ; S. ONORI ; G. RIZZONI.** 2009 American Control Conference. *ECMS as a realization of Pontryagin's minimum principle for HEV control,* 2009, 3964-3969
- **ARTIKEL F. WIDMER ; A. RITTER ; P. DUHR ; C. H. ONDER.** Battery lifetime extension through optimal design and control of traction and heating systems in hybrid drivetrains. *eTransportation,* 2022, vol. 14, 100196, https://doi.org/10.1016/j.etran.2022.100196